# EUROPEAN PATENT APPLICATION

(11) **EP 1 154 312 A1**
(43) Date of publication of application: **14.11.2001**
(21) Application number: 01304180.1
(22) Date of filing: 09.05.2001
(51) Int. Cl.: G02F 1/167

(54) **Eletrophoretic switching device with liquid crystalline dispersion medium and method of producing the same**

(30) Priority: 09.05.2000 JP 2000135834
(71) Applicant: Stanley Electric Co., Ltd., Tokyo 153-8636 (JP)
(72) Inventor: Toko, Yasuo, Meguro-ku, Tokyo 153-8636 (JP)
(74) Representative: Tomlinson, Kerry John

(57) **Abstract**

An optical switching device (10) includes two parallel substrates (11,12) having at least a pair of electrodes (14,15) on mutually opposing inner surfaces thereof or on one of the inner surfaces. A liquid crystalline material layer (13) is sealed between the substrates. The liquid crystalline material layer (13) contains an insoluble light-control medium (16) having an outer diameter smaller than the thickness of the liquid crystalline material layer. When an electric field is applied between the electrodes (14,15), the light-control medium (16) moves to form a region in which the light-control medium is densely dispersed and a region in which the light-control medium is sparsely dispersed, thereby producing a transmittance difference to effect light control. Because the loss of light transmitting through the optical switching device is extremely small, high-contrast and extremely bright display can be obtained without using a polarizing plate.

## Description

### BACKGROUND OF THE INVENTION

The present invention relates to an optical switching device for effecting "bright"/"dark" control of light by performing light control or light modulation using an electric signal, which is applicable to optical articles that utilize "bright" and "dark" of light, such as electronic displays, toys for children, diaphragms of cameras, light quantity controllers for electronic flashes, and writing light sources. More particularly, the present invention relates to an optical switching device, e.g. a display or a light quantity controller, which has an optical switching element formed by dispersing fine particles of a light-control medium in a dispersion medium consisting essentially of a liquid crystalline material, wherein an electric signal is applied to the optical switching element to move the light-control medium, thereby effecting light control. The present invention also relates to a method of producing the optical switching device.

As optical switching devices, liquid crystal display devices, which are non-luminescent electronic displays, have heretofore been used in various fields. The liquid crystal display devices are capable of performing optical switching between "bright" and "dark" states by controlling the polarized state of incident light according to the difference in the alignment state of the liquid crystal molecules, and used in various applications, such as liquid crystal shutters, in addition to liquid crystal displays. As other types of electronic displays, electrochromic displays, electrophoretic displays, twisted ball displays, etc. are known.

Many of liquid crystal display devices have a structure in which a pair of polarizing plates are disposed outside a liquid crystal layer. Accordingly, such liquid crystal display devices have the basic problem that there is a 50% loss of incident light due to the polarizing plates, although the display devices provide high contrast.

There are liquid crystal display devices that need no polarizing plate, i.e. PC-GH (Phase Change mode Guest-Host) liquid crystal displays that utilize absorption by dyes, and PD-LC (Polymer Dispersed Liquid Crystal) displays utilizing the scattering properties of liquid crystal. The PC-GH liquid crystal displays can provide bright display because no polarizing plate is used, but suffer from the problem that the contrast is unfavorably low. The contrast can be improved by increasing the amount of dichroic dye added to the liquid crystal material. In doing so, however, the transmittance of the cells is reduced to a considerable extent, resulting in unfavorably dark display. The PD-LC displays involve the problem that it is basically difficult to obtain black display satisfactorily. Consequently, these liquid crystal display devices using no polarizing plate cannot provide high contrast.

The electrochromic displays are capable of effecting bright and natural reflective display, although it is difficult to perform transmissive display with these devices. However, the electrochromic displays suffers from problems such as low contrast, a short lifetime and a slow response.

The electrophoretic displays and the twisted ball displays suffer low contrast and require a relatively high driving voltage. Further, these displays cannot perform transmissive display.

### SUMMARY OF THE INVENTION

The present invention was made as a result of conducting exhaustive studies to attain an optical switching device capable of solving the above-described problems associated with the prior art.

Accordingly, an object of the present invention is to provide a novel optical switching device capable of performing both transmissive display and reflective display with high contrast by using a liquid crystalline material.

Another object of the present invention is to provide a method of producing the above-described optical switching device.

According to a first aspect of the present invention, there is provided an optical switching device including two substrates placed parallel to each other. The substrates have at least a pair of electrodes on mutually opposing inner surfaces thereof or on one of the inner surfaces. A liquid crystalline material layer is sealed between the substrates. The liquid crystalline material layer contains an insoluble light-control medium having an outer diameter smaller than the thickness of the liquid crystalline material layer. When an electric field is applied between the electrodes, the light-control medium moves to form a region in which the light-control medium is densely dispersed and a region in which the light-control medium is sparsely dispersed, thereby producing a transmittance difference to effect light control.

According to a second aspect of the present invention, the liquid crystalline material layer in the optical switching device according to the first aspect is a liquid crystal layer formed by dispersing less than 50 wt% of a light-control medium in a liquid crystal material.

According to a third aspect of the present invention, the liquid crystal material in the optical switching device according to the second aspect has negative dielectric anisotropy, and the molecules of the liquid crystal material are aligned perpendicular to the inner surfaces of the substrates.

Thus, according to the first aspect of the present invention, a non-luminescent optical switching device with a minimal loss of external light is provided.

According to the second aspect of the present invention, it is possible to obtain an optical switching device providing a distinct difference between "bright" and "dark" states.

According to the third aspect of the present invention, it is possible to provide an optical switching device capable of moving the light-control medium with an even lower electric field.

According to a fourth aspect of the present invention, there is provided an optical switching device according to any one of the first to third aspects, wherein the two substrates are light-transmitting substrates, and the light-control medium is light-blocking fine particles. The liquid crystalline material layer is a liquid crystal layer formed by dispersing less than 50 wt% of light-blocking fine particles in a liquid crystal material.

Thus, it is possible to provide a bright transmission type optical switching device further superior in contrast and exhibiting high transmittance characteristics and hence capable of minimizing the loss of incident light.

According to a fifth aspect of the present invention, there is provided an optical switching device according to any one of the first to third aspects, wherein one of the two substrates is a light-transmitting substrate, and the other substrate is a non-light transmitting substrate. The light-control medium is fine particles different in color from the non-light transmitting substrate.

Thus, it is possible to provide a bright reflection type optical switching device further superior in contrast and exhibiting high reflectance characteristics and hence capable of minimizing the loss of incident light.

According to a sixth aspect of the present invention, there is provided an optical switching device according to any one of the second to fifth aspects, wherein the light-control medium moves in the liquid crystalline material layer with movement of the liquid crystal material induced by application of an electric field with a frequency of not higher than 500 Hz to the liquid crystalline material layer.

Thus, it is possible to provide an optical switching device in which a flow is effectively induced in the liquid crystal material to move the light-control medium.

According to a seventh aspect of the present invention, there is provided a method of producing an optical switching device including two substrates placed parallel to each other. The substrates have at least a pair of electrodes on mutually opposing inner surfaces thereof or on one of the inner surfaces. A liquid crystalline material layer is sealed between the substrates. The liquid crystalline material layer contains an insoluble light-control medium. The method includes the step of preparing a pair of substrates having electrode layers each formed in a pattern of predetermined configuration. The method further includes the steps of dispersing a light-control medium having a predetermined outer diameter in a liquid crystalline material, and sandwiching the liquid crystalline material containing the light-control medium between the pair of substrates having the electrode layers and sealing the peripheries of the substrates to seal in the liquid crystalline material.

According to an eighth aspect of the present invention, the second step in the optical switching device producing method according to the seventh aspect includes the step of mixing the light-control medium into the liquid crystalline material and then dispersing the light-control medium under application of ultrasonic waves.

The above and other objects, features and advantages of the present invention will become more apparent from the following description of the preferred embodiments thereof, taken in conjunction with the accompanying drawings.

### BRIEF DESCRIPTION OF THE DRAWINGS

Fig. 1 is a schematic sectional view illustrating an embodiment of the optical switching device according to the present invention.

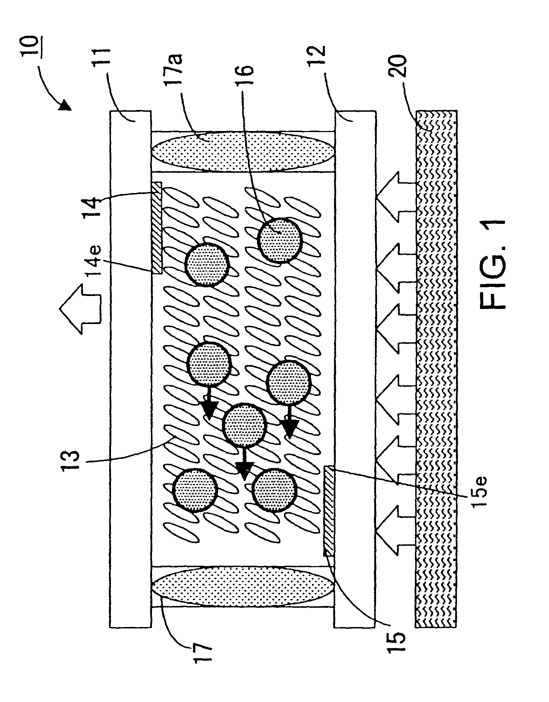

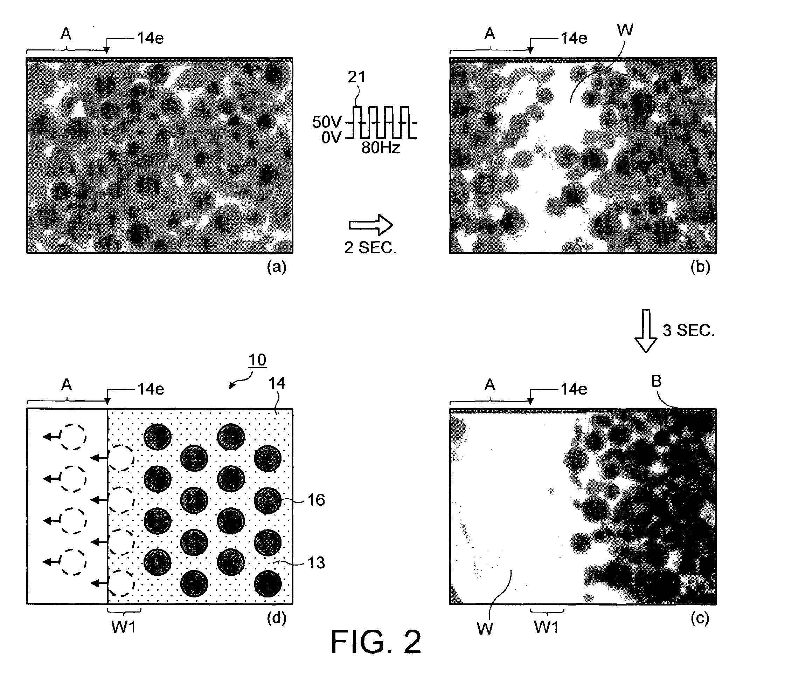

Fig. 2 is an explanatory drawing showing the results of microscopic observation of the optical switching device shown in Fig. 1, in which: part (a) is a photomicrograph showing the state of the optical switching device as produced; part (b) is a photomicrograph showing the state of the optical switching device 2 seconds after the application of a plus offset rectangular wave to the optical switching device in the state shown in part (a); part (c) is a photomicrograph showing the state of the optical switching device 3 seconds after the application of the same plus offset rectangular wave to the optical switching device in the state shown in part (b); and part (d) is a plan view schematically showing the state shown in part (c).

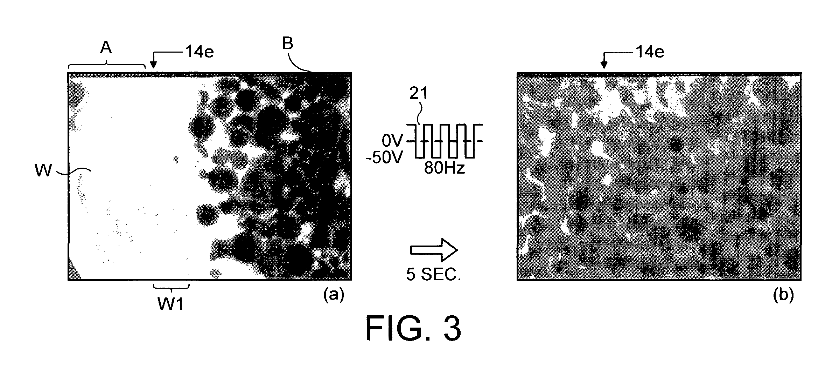

Fig. 3 is an explanatory drawing showing the results of microscopic observation of the optical switching device when an electric field opposite in polarity to the plus offset rectangular wave is applied to the optical switching device shown in Fig. 2, in which: part (a) is a photomicrograph showing the state of the optical switching device after the application of the plus offset rectangular wave, which is the same as part (c) of Fig. 2; and part (b) is a photomicrograph showing the state of the optical switching device 5 seconds after the application of the minus offset rectangular wave to the optical switching device in the state shown in part (a) of Fig. 3.
Fig. 4 is a schematic sectional view illustrating another embodiment of the optical switching device according to the present invention.
Fig. 5 is a graph showing the change with time of the reflectance and contrast of the optical switching device shown in Fig. 4.
Fig. 6 is a graph showing the relationship between the reflectance and viewing angle of the optical switching device shown in Fig. 4.
Fig. 7 is a graph showing the relationship between the contrast and viewing angle of the optical switching device shown in Fig. 4.

### DESCRIPTION OF THE PREFERRED EMBODIMENTS

Preferred embodiments of the present invention will be described below in detail with reference to Figs. 1 to 7.

Fig. 1 shows the arrangement of an embodiment of the optical switching device according to the present invention as used to perform transmissive display.

In the figure, an optical switching device 10 includes a pair of transparent substrates 11 and 12. A liquid crystalline material layer 13 is sealed between the substrates 11 and 12. An electrode 14 is formed on the inner surface of one substrate (i.e. the upper substrate in the illustrated example) 11. Another electrode 15 is formed on the inner surface of the other substrate (i.e. the lower substrate) 12.

A backlight source 20 is provided at the rear of the optical switching device 10 (i.e. at the lower side of the lower substrate 12 in the illustrated example). Light emitted from the backlight source 20 is visible through the optical switching device 10.

The substrates 11 and 12 are made of a light-transmitting material, e.g. quartz, glass, or plastic material. The substrates 11 and 12 have respective electrodes 14 and 15 formed in predetermined patterns on the inner surfaces thereof.

The electrodes 14 and 15 are transparent electrodes, e.g. ITO (Indium Tin Oxide) electrodes. The electrodes 14 and 15 are provided on the respective inner surfaces of the substrates 11 and 12 in such a manner that no parts of the electrodes 14 and 15 face directly opposite to each other. That is, the electrodes 14 and 15 are arranged so as not to overlap each other. The electrodes 14 and 15 are connected with an external power supply (not shown) so that an electric field can be applied to the liquid crystalline material layer 13.

The liquid crystalline material layer 13 is sandwiched between the substrates 11 and 12 and sealed at the periphery thereof with a sealing material 17. The hermetically sealed liquid crystalline material layer 13 has a finely divided light-control medium 16 mixed therein in the form of dispersed particles. The thickness of the liquid crystalline material layer 13 is preferably selected in the range of from 2 µm to 300 µm. The greater the thickness of the liquid crystalline material layer 13, the higher the contrast becomes. However, if the liquid crystalline material layer 13 is excessively thick, it becomes difficult to obtain well-ordered liquid crystal molecular alignment. Accordingly, it is even more desirable that the thickness of the liquid crystalline material layer 13 be set at not more than 100 µm.

The inner surfaces of the substrates 11 and 12 may be formed with respective alignment layers (not shown). By subjecting the alignment layers to alignment treatment, the liquid crystalline material layer 13 can be readily controlled to a predetermined alignment state.

As the liquid crystalline material layer 13, for example, a nematic liquid crystal material with negative dielectric anisotropy is usable. As the light-control medium 16, it is possible to use various metallic oxides, such as TiO₂, SiO₂ and ZnO, and organic substances such as styrene balls, which are finely divided to have a particle size of from 5 µm to 10 µm, for example. It is preferable that the light-control medium 16 be added in a proper quantity within the range of from 0.1 to 60 wt% with respect to the liquid crystalline material and dispersed under application of ultrasonic vibration or the like. In the case of transmission type display, the light-control medium 16 is preferably one that presents black color or the like with a view to providing high contrast. However, it is also possible to use pigments of other colors for the light-control medium 16.

It should be noted that the sealing material 17 contains spacers 17a made of glass, plastics or the like and having a predetermined outer diameter to maintain the thickness of the liquid crystalline material layer 13. The spacers 17a have a larger outer diameter than that of the light-control medium 16.

The optical switching device 10 according to the embodiment of the present invention, arranged as stated above, operates as follows.

When a positive or negative electric field is applied between the electrodes 14 and 15, the orientation of the liquid crystal molecules in the liquid crystalline material layer 13 changes in accordance with the applied electric field. At this time, the light-control medium 16 dispersedly mixed in the liquid crystalline material layer 13 moves, together with the liquid crystal molecules, in a dispersion medium consisting essentially of the liquid crystalline material layer 13. This causes a change in the distribution density of the light-control medium 16 in the liquid crystalline material layer 13.

Accordingly, when light emitted from the backlight source 20 enters the optical switching device 10, the incident light is blocked by the light-control medium 16 in a region where the distribution density of the light-control medium 16 is high. In a region where the distribution density of the light-control medium 16 is reduced by the application of the electric field, the incident light passes through the liquid crystalline material layer 13 without being blocked by the light-control medium 16. Thus, it is possible to perform "dark"/"bright" switch action according to whether the light-control medium 16 is present or not (i.e. whether the distribution density is high or low).

The present invention will be described below by way of specific examples.

### Example 1:

A pair of glass substrates 11 and 12 with a thickness of 1.1 mm were prepared, which were each formed with an ITO layer with a thickness of about 0.2 µm. The ITO layers on the glass substrates 11 and 12 were subjected to linear patterning to form electrodes 14 and 15. The surfaces of the electrodes 14 and 15 were coated with respective alignment layers (not shown) for vertical alignment made of a side-chain polyimide film so that a high pretilt angle would be obtained. Then, the alignment layers were subjected to alignment treatment. It should be noted that publicly known alignment techniques are usable for the alignment treatment. Therefore, it is possible to subject the alignment layers to non-alignment treatment, rubbing, optical alignment treatment, etc. In this example, however, the alignment layers were subjected to optical alignment treatment so that the direction of orientation of the liquid crystal molecules had a pretilt angle of 85 degrees with respect to the substrate surface. Further, the periphery of one substrate was coated with a sealing material 17 mixed with glass spacers 17a having an outer diameter of 15 µm.

Meanwhile, a liquid crystal material with negative dielectric anisotropy (Δε ≒ 2.0) was prepared. 10 wt% of styrene balls with a particle size of 5 to 10 microns that had been colored with a black pigment was added to the liquid crystal material as a light-control medium 16 and uniformly dispersed therein under application of ultrasonic vibration.

Next, the liquid crystal material having the light-control medium 16 uniformly dispersed therein as stated above was dropped on the pair of the glass substrates 11 and 12. Then, the glass substrates 11 and 12 were laminated in such a manner that the ITO electrode 14 on the glass substrate 11 and the ITO electrode 15 on the glass substrate 12 were located on the mutually opposing inner surfaces of the glass substrates 11 and 12. The glass substrates 11 and 12 were secured together with the sealing material 17.

In this case, as shown in Fig. 1, the electrodes 14 and 15 are arranged such that the electrode layers do not face opposite to each other in the direction of the line normal to each substrate, and a distance of 200 µm is provided between the mutually opposing inner ends 14e and 15e of the electrodes 14 and 15 so that a non-electrode region A where no electrode layer is formed is provided between the two electrodes 14 and 15.

The optical switching device 10 produced as stated above has a structure such as that shown schematically in Fig. 1. That is, a liquid crystal layer 13 containing black styrene balls 16 is sandwiched between a pair of glass substrates 11 and 12 having ITO transparent electrodes 14 and 15 on their mutually opposing inner surfaces. The optical switching device 10 is placed in front of a backlight source 20 (i.e. directly above the backlight source 20 in Fig. 1).

Although the thickness of the liquid crystal layer 13 was set at 15 µm by the glass spacers mixed in the sealing material 17, there was a thickness difference as large as 5 µm between relatively thick and thin regions of the liquid crystal layer 13. It was feared that the optical switching device 10 might have a large variation in transmittance owing to the thickness deviation of the liquid crystal layer 13. However, the difference in transmittance between the regions having the thickness deviation was less than 1%. Thus, the thickness deviation of the liquid crystal layer 13 had substantially no effect on the transmittance.

Fig. 2 shows photomicrographs of an optical switching part (light-control part) of the optical switching device 10 produced as stated above. Part (a) of Fig. 2 shows the optical switching part of the optical switching device 10 before the application of an electric field to the liquid crystal layer 13. As will be understood from the figure, the black styrene balls 16, which constitute a light-control medium, are uniformly dispersed throughout the liquid crystal layer 13. That is, the black styrene balls 16 are dispersed in a state where there is no large difference in the black styrene ball distribution density between any regions of the liquid crystal layer 13. Moreover, the black styrene balls 16 are densely packed in the liquid crystal layer 13. The transmittance of the optical switching device 10 in this state was about 3%.

Next, an electric field was applied to the liquid crystal layer 13 of the optical switching device 10 from an external power supply (not shown). The electric field was applied by using a plus offset rectangular wave 21 obtained by applying an offset voltage so that a DC component was superimposed thereon. The voltage waveform used in this example had a frequency of 80 Hz. The offset voltage was 50 V, and the peak-to-peak voltage was 100 V.

Two seconds after the application of the plus offset rectangular wave 21, a white display portion W of the order of 20 microns in size appeared as shown in part (b) of Fig. 2. The transmittance of the white display portion W was not less than 90%.

The same plus offset rectangular wave 21 was further applied continuously. Three seconds after the application of the plus offset rectangular wave 21, the white display portion W increased to a size not less than 50 microns as shown in part (c) of Fig. 2. It should be noted that the transmittance of this white display portion W was also not less than 90%, whereas the transmittance of the black display portion B was about 3%. Accordingly, the white display portion W transmitted not less than 90% of light entering the optical switching device 10 from the backlight source 20 and thus provided bright display. The contrast of the white display portion W with respect to the black display portion B was approximately 30 (=90/3). Thus, it was possible to provide display with high contrast.

When the plus offset rectangular wave 21 was applied to the ITO electrode 15 of the lower substrate 12 of the optical switching device 10 in a state where the ITO electrode 14 of the upper substrate 11 was grounded, it was observed with a microscope that the black styrene balls 16 appeared to be moving with the flow of the liquid crystal layer 13 serving as a dispersion medium.

The mechanism of the movement of the black styrene balls 16 has not yet become clear. However, as a result of various behavior observations, it is supposed that the movement of the black styrene balls 16 is caused by the flow of the liquid crystal relative to the electric field.

The liquid crystal flow phenomenon is also observable in publicly known liquid crystal display devices. In a vertical alignment ECB (Electrically Controlled Birefringence) mode liquid crystal display device, in particular, when the device is driven by using a signal in a low-frequency region (of the order of 100 Hz or less) in a 60 Hz drive system, for example, the liquid crystal flow phenomenon is remarkably observable. The liquid crystal flow phenomenon in the low-frequency region is a phenomenon in which the display on the liquid crystal display device is observed as if it were flowing wavily. Such a phenomenon is a defect in the liquid crystal display device. Therefore, it is rare that the liquid crystal flow phenomenon is observed in ordinary products.

It is surmised that the liquid crystal flow phenomenon is one of the reasons why the black styrene balls 16 appear to be moving with the flow of the liquid crystal layer 13 serving as a dispersion medium. It is supposed that the liquid crystal flow phenomenon takes part in the movement of the black styrene balls 16 contained in the liquid crystal layer 13 as a light-control medium with the flow of the liquid crystal molecules.

The black styrene balls 16 used as a light-control medium in this example are a material having a polarity. The black styrene balls 16 have a weak minus charge. This is also assumed to be concerned with the movement of the black styrene balls 16. However, it is supposed according to the examination made by the inventor of this application that the polarity of the fine particles is not an essential cause of the movement thereof. The reason for this is that the speed of movement of the black styrene balls 16 in the optical switching device 10 of this example is higher than the speed of electrophoretic movement of fine particles similar to but larger in electric charge quantity than the black styrene balls 16. It can hardly be supposed that the black styrene balls 16 having a weak minus charge can move as far as about 20 µm in 2 seconds.

It will also be understood from parts (b) and (c) of Fig. 2 that in the optical switching device 10 of this example, the black styrene balls 16 move not only in the non-electrode region A but also in a region inside the ITO electrode, although the movement in this region is as slight as about 10 microns from the electrode end 14e, whereby a white display portion W1 is produced. It should be noted that part (d) of Fig. 2 shows schematically the state of the black styrene balls 16 in part (c) of Fig. 2.

It seems to be probable that the white display portion W1 is produced under the influence of an oblique electric field. In this example, the ITO electrode 14 formed on the upper substrate 11 and the ITO electrode 15 on the lower substrate 12 are positioned in a diagonal relation to each other. Therefore, it is supposed that an oblique electric field is applied to a region inside the electrode, and the white display portion W1 is produced under the influence of the oblique electric field.

It should be noted that the range in which the oblique electric field exerts an influence on the black styrene balls 16 nearly correlates with the thickness of the liquid crystal layer 13. There is a tendency for the range of the influence of the oblique electric field to increase as the thickness of the liquid crystal layer 13 increases. More specifically, the range in which the light-control medium 16 is movable under the influence of the oblique electric field extends deep inside the electrode as far as a position approximately corresponding to the thickness of the liquid crystal layer 13. Therefore, to utilize the white display portion W1 also as an optical switching portion, it is preferable to use transparent electrodes. When the optical switching device 10 is used as an electronic display, the opening ratio of the display area can be increased by using transparent electrodes.

It should be noted that the liquid crystal flow phenomenon is also observable in the case of horizontal alignment but not so remarkable as in the case of vertical alignment. Therefore, the liquid crystal alignment should preferably be one other than horizontal alignment.

When the electric field strength is increased, the influence of the electric field tends to increase. In this regard, when an electric field was applied between electrodes placed in a direction not parallel to the direction orientation of the liquid crystal molecules, the direction of movement of the light-control medium showed a tendency to depend on the strength of the electric field.

Although in the above-described example the frequency of the offset rectangular wave is 80 Hz, the present invention is not particularly limited to the described condition. Movement of the black styrene balls 16 was also observed when the frequency was in the range of from 1 Hz to 1 MHz. However, an excessively low frequency may have an adverse effect on the liquid crystal. Conversely, if the frequency is increased excessively (approximately 500 Hz or higher), the speed of movement of the black styrene balls 16 tends to decrease gradually.

The peak-to-peak voltage may be set in the range of from 1 V to 3000 V. However, the speed of movement of the light-control medium tends to decrease as the peak-to-peak voltage becomes lower. It was possible to confirm the movement of the light-control medium at a peak-to-peak voltage of 10 V or less, for example. However, the black styrene balls 16 may include those which move at an exceedingly low speed and those which are immovable. Therefore, a peak-to-peak voltage of 50 V or more is supposed to be necessary from the practical point of view. It should be noted that these conditions are not limitative.

It was confirmed that the state shown in part (c) of Fig. 2 was maintained in the same condition for at least one month even when the device was allowed to stand at room temperatures after the application of the offset rectangular wave, and that there was no transverse movement of the black styrene balls 16 even at the micron level. Accordingly, the optical switching device 10 has memory properties for display (light-control characteristics).

Fig. 3 shows a result of a microscopic observation of the optical switching part of the optical switching device 10 when an offset rectangular wave of the opposite polarity was applied to return the moved black styrene balls 16 to the previous uniformly dispersed state.

Part (a) of Fig. 3 shows the state before the application of a minus offset rectangular wave 22, that is, the state shown in part (c) of Fig. 2. The voltage waveform used as the minus offset rectangular wave 22 had a frequency of 80 Hz. The offset voltage was -50 V, and the peak-to-peak voltage was 100 V.

About 5 seconds after the application of the minus offset rectangular wave 22, the black styrene balls 16 moved as shown in part (b) of Fig. 3 to return to the same black display state as that shown in part (a) of Fig. 2.

In the foregoing example, when the movement of the black styrene balls 16 is observed with a microscope, the black styrene balls 16 used as a light-control medium appear to be moving with the flow of the liquid crystal as a dispersion medium induced by the application of the voltage. Accordingly, the flow phenomenon of the liquid crystal induced by the applied electric field is considered to be a principal cause of the movement of the light-control medium. Therefore, it is deemed to be preferable that a liquid crystal layer 13 based on the vertical alignment ECB mode, in which the flow phenomenon of the liquid crystal readily occurs, should be used as a liquid crystalline material layer, and the pretilt angle of the liquid crystal molecules should be set at as high an angle as possible in the range of from 75 degrees to 90 degrees to provide vertical alignment. By doing so, the flow phenomenon is allowed to occur remarkably.

### Example 2:

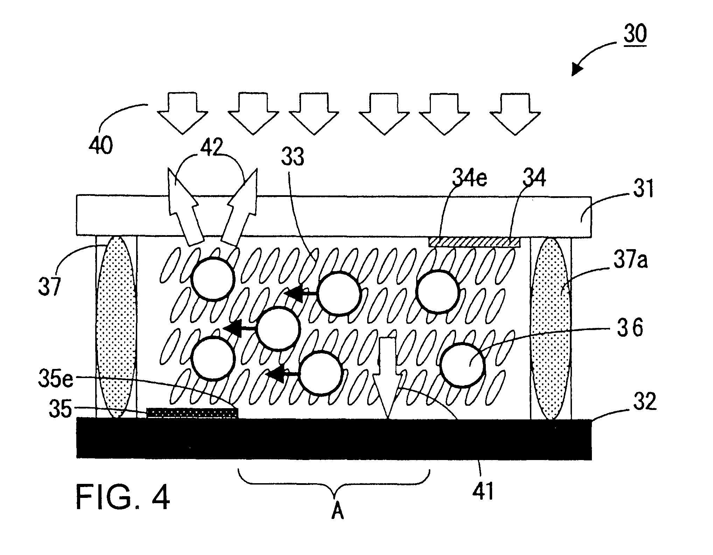

Fig. 4 shows an optical switching device 30 according to an embodiment of the present invention as used in the form of a reflection type display. A transparent glass substrate 31 formed with a striped ITO transparent electrode 34 and a black resin substrate 32 formed with a striped Al electrode 35 were prepared. Next, the surfaces of the substrates 31 and 32 were coated with respective side-chain polyimide films for vertical alignment, thereby forming alignment layers (not shown). It should be noted that the alignment layers were not positively subjected to alignment treatment such as rubbing or optical alignment.

Meanwhile, a liquid crystal material with negative dielectric anisotropy (Δε ≒ 2.0) was prepared. 10 wt% of polystyrene hollow balls with a particle size of 0.5 microns (2 to 20 microns after aggregation) that had not been colored with a pigment or the like was added to the liquid crystal material as a light-control medium 36 and uniformly dispersed therein under application of ultrasonic vibration.

Next, the liquid crystal material having the light-control medium 36 uniformly dispersed therein as stated above was sandwiched between the pair of the substrates 31 and 32. The peripheral portions of the substrates 31 and 32 were firmly bonded together with a sealing material 37, thereby producing an optical switching device 30.

It should be noted that as shown in Fig. 4, the electrodes 34 and 35 are arranged such that the electrode layers do not face opposite to each other in the direction of the line normal to each substrate, and a distance of 500 µm is provided between the mutually opposing inner ends 34e and 35e of the electrodes 34 and 35 so that a non-electrode region A where no electrode layer is formed is provided between the two electrodes 34 and 35.

The sealing material 37 contains spacers 37a having an outer diameter of 25 µm to control the thickness of the liquid crystal layer 33 to 25 µm.

In the optical switching device 30 produced as stated above, the pretilt angle of the liquid crystal molecules in the liquid crystal layer 33 was controlled to 90 degrees by the vertical alignment layers provided on the substrates 31 and 32. The thickness of the liquid crystal layer 33 was 25 microns. The thickness deviation of the liquid crystal layer 33 was about 5 microns. However, the variation in reflectance was less than 1%.

When the same plus offset rectangular wave as that used in Example 1 was applied to the optical switching device 30, the liquid crystal molecules and the light-control medium 36 in the liquid crystal layer 33 exhibited the same behavior as that in Example 1. The "black" and "white" display state was exactly reverse to that shown in Fig. 2. The behavior of the light-control medium 36 with respect to the applied voltage was substantially the same as in Example 1. When a minus offset rectangular wave, which was opposite in polarity to the plus offset rectangular wave, was applied to the optical switching device 30, the light-control medium 36 also exhibited the same behavior as in Example 1. The light-control medium 36 moved between the electrodes according to the polarity of the applied electric field.

In the optical switching device 30 of this example, the black resin substrate 32 is used as a back substrate, and the light-control medium 36 is a white material. Accordingly, when ambient light 40 enters the optical switching device 30, light impinging on the light-control medium 36 returns toward the observer in the form of reflected light 42 and is observed as white display. Light 41 entering a region where no light-control medium is present is absorbed by the black substrate 32 and is observed as black display.

Accordingly, the optical switching device in Example 2 functions as a reflection type display, whereas the optical switching device in Example 1 functions as a transmission type display.

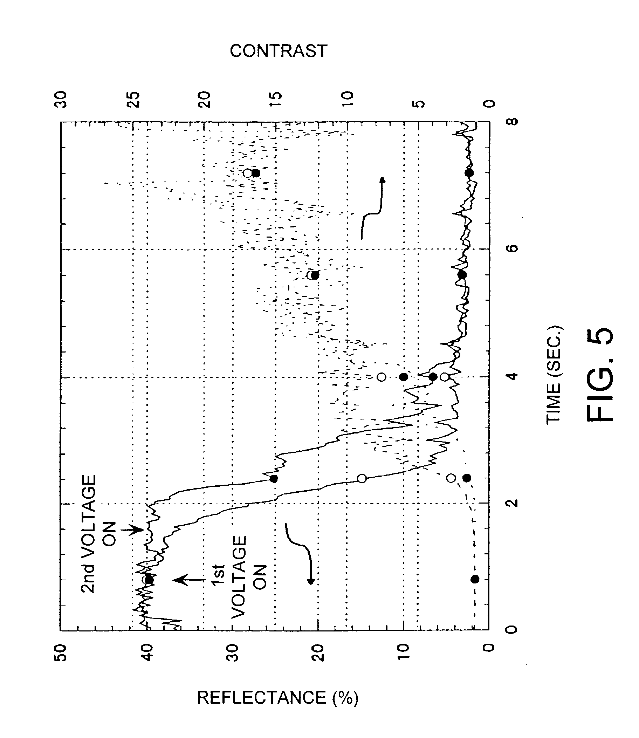

Fig. 5 is a graph showing the results of measurement of the reflection characteristics of the optical switching device 30 produced as stated above. The measurement was carried out by using LCD-5000 (manufactured by Otsuka Electronics Co., Ltd.). A 30° spot beam was made incident on a display portion near the electrode, and the reflectance was measured from the normal direction by narrowing down the spot to 200 µm in diameter. The reflectance of a standard white plate was measured under the same measuring conditions, and the result of the measurement was assumed to be 100%. By using the measurement result as the reference, an evaluation was carried out. The measurement was made at two different places. In Fig. 5, the result of the first measurement is shown as "1st" (white circles), and the result of the second measurement as "2nd" (black circles).

In the first and second measurements, an offset rectangular wave with a frequency of 80 Hz, an offset voltage of 50 V and a peak-to-peak voltage of 100 V was applied as in the case of Example 1. The polarity of the offset rectangular wave was changed at the timing shown by the arrow in the graph for each measurement, and the change of reflectance with time was measured. The solid lines show the results of measurement of reflectance. The broken lines show the results of calculation of the contrast of the optical switching device in the first and second measurements. It should be noted that the contrast was obtained from the change in reflectance with respect to the reflectance/time (voltage) during OFF ("bright" display).

As will be clear from the graph, the reflectance seems to be substantially saturated 1.5 to 2.0 seconds after the voltage "ON" timing. However, it will be understood that the reflectance still changes thereafter, although the change is slight, and the contrast improves with the passage of time.

The light-control medium 36 consisting essentially of white styrene ball fine particles (particle size: 0.5 µm) takes more than 8 seconds to completely disappear (move) from the range of a spot of 200 µm in diameter. However, this can be improved by optimization of the structure, material, liquid crystal alignment conditions, etc.

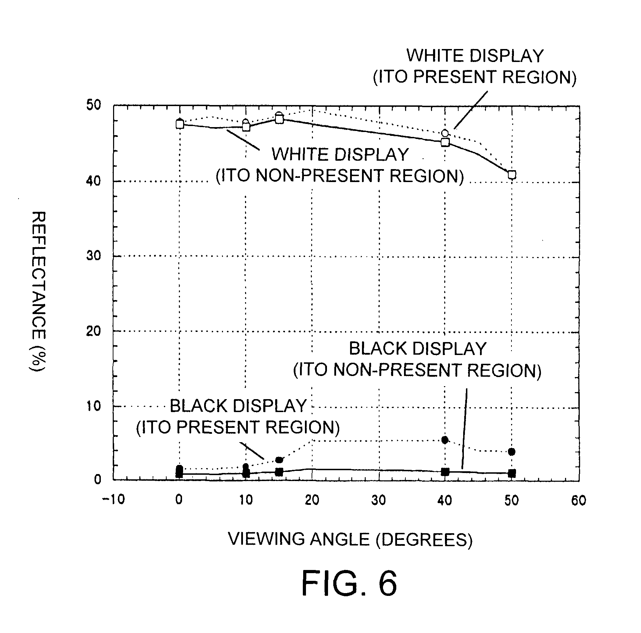

Fig. 6 is a graph showing the relationship between the reflectance and viewing angle of the optical switching device shown in Fig. 4. Measuring conditions were the same as in the measurement method described in connection with Fig. 5 except that the measuring direction was changed from the normal direction (0°) to 50° (extreme angle). It will be understood from the graph that the reflectance of the white display shows substantially no change even when the viewing angle is changed. Therefore, the white display is very bright regardless of the viewing angle as in the case of paper. The reflectance of the black display also shows substantially no change with changes in the viewing angle. Therefore, the black display is very dark regardless of the viewing angle. It should be noted that the reflectance of commercially available copying paper of fine quality was measured as the reference by using the same measuring system. The measured reflectance was about 65%.

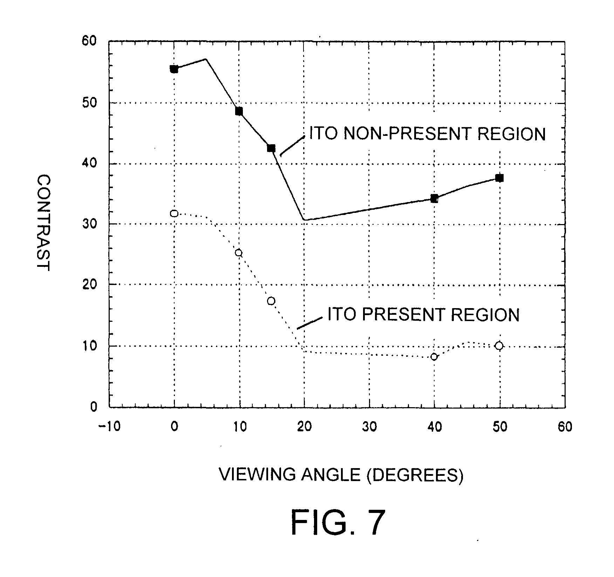

In comparison between a region where an ITO electrode is present and a region where no ITO electrode is present, i.e. the non-electrode region A, the black display in the ITO electrode region appears to be raised above the non-electrode region A. Therefore, the relationship between the contrast and viewing angle of the optical switching device was also examined. The results of the comparison are shown in Fig. 7.

As will be understood from Fig. 7, the display in the non-electrode region A exhibits extremely excellent characteristics, i.e. a contrast of more than 30, over the entire viewing angle range of from 0° to 50°. The display in the ITO electrode region also exhibits excellent characteristics, i.e. a contrast of more than about 10, over the entire viewing angle range, although it is inferior to the display in the non-electrode region A. It should be noted that the contrast of paper obtained from the result of measurement made on the paper printed solid black for reference was of the order of 13. These numerical values suggest that the optical switching device according to the present invention as used as a reflection type electronic display can serve as a display device having contrast-viewing angle characteristics equivalent or superior to those of paper. In the reflection type display according to the present invention, most of display portions need not install an ITO transparent electrode. Therefore, it is possible to make full use of the excellent display characteristics of the non-electrode region A.

In the foregoing embodiments, white or black styrene fine particles are used. However, it will be apparent that fine particles colored (shaded) in other colors are also usable. It is also possible to use fine particles subjected to surface treatment (with a surface-active agent or the like), which will not disorder the liquid crystal alignment, so that leakage of light is further reduced. In such cases, it is possible to obtain an optical switching device capable of causing desired changes in color or a uniform optical switching device free from leakage of light.

Further, although a substrate formed by using a resin material having light-absorbing characteristics is used as the back substrate 32, it is also possible to use a glass substrate with a light-absorbing coating film formed on the inner or back surface thereof. Alternatively, a black light-scattering plate may be installed behind a glass substrate. The arrangement may also be such that the light-control medium 36 is replaced with a black or other light-absorbing material, and the black resin substrate 32 is replaced with a substrate having high reflectance characteristics, e.g. a white substrate.

It is also possible to form active elements such as TFT (Thin-Film Transistors). Although in the foregoing embodiments the electrodes are formed on the two substrates by patterning, the two electrodes may be provided on one substrate. For example, it is possible to use a structure in which TFT electrodes and a common electrode are formed on the same substrate, such as that employed for a TFT array substrate for an IPS-LCD (In-Plane Switching Liquid Crystal Display).

Although various technically preferred limitations are added to the foregoing embodiments because these are preferred specific examples of the present invention, it should be noted that the present invention is not limited by the described embodiments. For example, the offset wave applied to the optical switching device is not necessarily limited to the rectangular wave but may be a triangular wave, a sine wave, etc.

Further, the medium for movement of the light-control medium is not necessarily limited to a liquid crystal material with negative dielectric anisotropy. It is also possible to use a liquid crystal with positive dielectric anisotropy and to control the liquid crystal to a horizontal alignment state or an oblique alignment state. Other liquid crystalline materials are also usable.

As has been stated above, the present invention is arranged to carry out "bright"/"dark" light control according to whether the light-control medium is present or not, i.e. according to whether the distribution density of the light-control medium is high or low. Therefore, it is possible to provide a non-luminescent optical switching device with a minimum loss of external light. Accordingly, it is possible to perform bright optical switching superior in contrast without using a polarizing plate. When the optical switching device is used in an electronic display or the like, it is possible to obtain a display system equivalent in contrast to a display printed on paper.

The optical switching device can be used in the reflection mode by setting light-absorbing or reflection characteristics of the back substrate and the light-control medium in opposite relation to the transmission mode. Thus, it is possible to provide a bright reflection type optical switching device further superior in contrast and exhibiting high reflectance characteristics and hence capable of minimizing the loss of incident light.

It should be noted that the present invention is not necessarily limited to the foregoing embodiments but can be modified in a variety of ways without departing from the gist of the present invention.

## Claims

1. An optical switching device comprising:
two substrates placed parallel to each other, said substrates having at least a pair of electrodes on mutually opposing inner surfaces thereof or on one of said inner surfaces; and
a liquid crystalline material layer sealed between said substrates, said liquid crystalline material layer containing an insoluble light-control medium having an outer diameter smaller than a thickness of said liquid crystalline material layer;
wherein when an electric field is applied between said electrodes, said light-control medium moves to form a region in which said light-control medium is densely dispersed and a region in which said light-control medium is sparsely dispersed, thereby producing a transmittance difference to effect light control.

2. An optical switching device according to claim 1, wherein said liquid crystalline material layer is a liquid crystal layer formed by dispersing less than 50 wt% of a light-control medium in a liquid crystal material.

3. An optical switching device according to claim 2, wherein said liquid crystal material has negative dielectric anisotropy, and molecules of said liquid crystal material are aligned perpendicular to the inner surfaces of said substrates.

4. An optical switching device according to any one of claims 1 to 3, wherein said two substrates are light-transmitting substrates, and said light-control medium is light-blocking fine particles.

5. An optical switching device according to any one of claims 1 to 3, wherein one of said two substrates is a light-transmitting substrate, and the other of said two substrates is a non-light transmitting substrate,
wherein said light-control medium is fine particles different in color from said non-light transmitting substrate.

6. An optical switching device according to any one of claims 2 to 5, wherein said light-control medium moves in said liquid crystalline material layer with movement of said liquid crystal material induced by application of an electric field with a frequency of not higher than 500 Hz to said liquid crystalline material layer.

7. A method of producing an optical switching device including two substrates placed parallel to each other, said substrates having at least a pair of electrodes on mutually opposing inner surfaces thereof or on one of said inner surfaces, and a liquid crystalline material layer sealed between said substrates, said liquid crystalline material layer containing an insoluble light-control medium, said method comprising the steps of:
preparing a pair of substrates having electrode layers each formed in a pattern of predetermined configuration;
dispersing a light-control medium having a predetermined outer diameter in a liquid crystalline material; and
sandwiching said liquid crystalline material containing said light-control medium between said pair of substrates having said electrode layers and sealing peripheries of said substrates to seal in said liquid crystalline material.

8. A method of producing an optical switching device according to claim 7, wherein said step of dispersing a light-control medium having a predetermined outer diameter in a liquid crystalline material includes the step of mixing the light-control medium into the liquid crystalline material and then dispersing said light-control medium under application of ultrasonic waves.
